# EUROPÄISCHE PATENTANMELDUNG

(11) **EP 3 437 910 A1**
(43) Veröffentlichungstag der Anmeldung: **06.02.2019**
(21) Anmeldenummer: 18186862.1
(22) Anmeldetag: 01.08.2018
(51) Int. Cl.: B60K 6/48, B60K 7/00, B60K 6/52, B60K 6/547, B60W 10/08, B60W 20/10, B60W 50/14

(54) **VERFAHREN ZUM BETREIBEN EINES HYBRIDFAHRZEUGES, SOWIE HYBRIDFAHRZEUG**

(30) Priorität: 04.08.2017 DE 102017213604
(71) Anmelder: Ford Global Technologies, LLC, Dearborn, MI 48126 (US)
(72) Erfinder: Pott, Julian David, 52074 Aachen (DE); Christen, Urs, 52066 Aachen (DE); Busch, Rainer, 52076 Aachen (DE)
(74) Vertreter: Dörfler, Thomas

(57) **Zusammenfassung**

Die Erfindung betrifft ein Verfahren zum Betreiben eines Hybridfahrzeuges, sowie ein Hybridfahrzeug, wobei das Hybridfahrzeug ein Schaltgetriebe sowie ein Hybridsystem mit einem Verbrennungsmotor und wenigstens einem Elektromotor aufweist. Bei dem erfindungsgemäßen Verfahren erfolgt ein Antrieb des Hybridfahrzeuges in einem ersten Antriebsmodus ausschließlich über den Elektromotor, wobei ein Antrieb des Hybridfahrzeuges in einem zweiten Antriebsmodus sowohl über den Elektromotor als auch über den Verbrennungsmotor erfolgt, und wobei in dem ersten Antriebsmodus das von dem Elektromotor (13, 23, 33, 37) bereitgestellte Ausgangsdrehmoment abhängig von dem im Schaltgetriebe (11, 21, 31) aktuell eingelegten Gang modifiziert wird.

## Beschreibung

Die Erfindung betrifft ein Verfahren zum Betreiben eines Hybridfahrzeuges, sowie ein Hybridfahrzeug.

In einem mit Schaltgetriebe ausgestatteten Hybridfahrzeug, welches über rein elektrische ("electric only") Antriebsmodi verfügt, kann die Auswahl eines bestimmten Ganges in einem manuellen Schaltgetriebe zu Problemen beim Schließen des Antriebsstranges führen, wenn abtriebsseitig des Schaltgetriebes bzw. stromabwärts im Antriebsstrang eine elektrische Maschine vorgesehen ist und eine Achse (als elektrisch angetriebene Achse) oder ein Fahrzeugrad antreibt. Hierbei kann das Problem auftreten, dass die Drehzahl der Antriebswelle des Schaltgetriebes gegebenenfalls zu gering oder zu hoch ist, um mit dem Verbrennungsmotor synchronisiert zu werden, wenn ein Umschalten vom rein elektrischen Antrieb des Hybridfahrzeuges zum Hybridantrieb oder zu einem reinen Verbrennungsmotorantrieb erfolgt.

Aus EP 2 090 808 A2 sind u.a. ein Schaltanzeiger und ein Schaltanzeigeverfahren bekannt, bei denen der Fahrer zum Schalten in einen bestimmten Gang durch eine Schaltaufforderung aufgefordert werden kann, wenn eine entsprechende Notwendigkeit hierfür auf Basis des erfassten Fahrzeugzustands ermittelt wurde.

Aus DE 10 2010 047 332 A1 sind u.a. eine Hybridfahrzeugkonfiguration und ein Verfahren zum Umkonfigurieren einer Nichthybrid-Fahrzeugarchitektur als Hybrid-Fahrzeugarchitektur bekannt, wobei in dem Hybridfahrzeug eine elektrische Maschine bzw. ein Elektromotor stromabwärts des Getriebes im Antriebsstrang montiert ist.

Es ist eine Aufgabe der vorliegenden Erfindung, ein Verfahren zum Betreiben eines Hybridfahrzeuges sowie ein Hybridfahrzeug bereitzustellen, welche einen Übergang vom rein elektrischen Antriebsmodus zum Hybrid-Antriebsmodus unter Vermeidung des eingangs beschriebenen Problems ermöglichen.

Diese Aufgabe wird durch das Verfahren gemäß den Merkmalen des unabhängigen Patentanspruchs 1 bzw. das Hybridfahrzeug gemäß den Merkmalen des nebengeordneten Patentanspruchs 8 gelöst.

Bei einem erfindungsgemäßen Verfahren zum Betreiben eines Hybridfahrzeuges, wobei das Hybridfahrzeug ein Schaltgetriebe sowie ein Hybridsystem mit einem Verbrennungsmotor und wenigstens einem Elektromotor aufweist, erfolgt ein Antrieb des Hybridfahrzeuges in einem ersten Antriebsmodus ausschließlich über den Elektromotor, wobei ein Antrieb des Hybridfahrzeuges in einem zweiten Antriebsmodus sowohl über den Elektromotor als auch über den Verbrennungsmotor erfolgt, wobei in dem ersten Antriebsmodus das von dem Elektromotor bereitgestellte Ausgangsdrehmoment abhängig von dem im Schaltgetriebe aktuell eingelegten Gang modifiziert wird.

Gemäß einer Ausführungsform erfolgt das Modifizieren derart, dass das von dem wenigstens einen Elektromotor bereitgestellte Ausgangsdrehmoment auf einen Wert begrenzt wird, der für den im Schaltgetriebe aktuell eingelegten Gang bei Antrieb im Hybrid-Antriebsmodus vom Hybridsystem geliefert würde.

Gemäß einer Ausführungsform erfolgt das Modifizieren derart, dass dem Fahrer das Vorliegen eines ungeeigneten, im Schaltgetriebe aktuell eingelegten Ganges über eine mit dem Modifizieren einhergehende Verringerung der Fahrzeugbeschleunigung signalisiert wird.

Der Erfindung liegt insbesondere das Konzept zugrunde, in einem Antriebsstrang eines mit einem Schaltgetriebe ausgestatteten Hybridfahrzeuges, in welchem die elektrische Maschine bzw. der Elektromotor stromabwärts des Getriebes oder an einer unabhängig angetriebenen Achse bzw. einem Rad montiert ist, das von dem Elektromotor bereitgestellte Ausgangsdrehmoment in Abhängigkeit von dem jeweils gewählten Gang zu skalieren.

Des Weiteren beinhaltet die vorliegende Erfindung das Konzept, dem Fahrer eines Kraftfahrzeuges in anderer Weise als lediglich in akustischer und/oder hörbarer Weise aktiv ein Feedback zu geben, wenn ein unpassender bzw. ungeeigneter Gang eingelegt ist und eine Synchronisation mit dem Verbrennungsmotor aufgrund der zu niedrigen Drehzahl der Antriebswelle nicht möglich wäre.

Die Erfindung ermöglicht es dabei, dem Fahrer eines Hybridfahrzeuges ein Gefühl dafür zu geben, welchen Gang er gewählt hat, indem das Drehmoment während eines rein elektrischen Antriebsmodus auf einen Wert begrenzt wird, der vorliegen würde, wenn das Drehmoment in dem gegebenen Gang von dem Hybridsystem bzw. im Hybrid-Antriebsmodus (in welchem Drehmoment sowohl vom Verbrennungsmotor als auch vom Elektromotor bereitgestellt wird) geliefert würde. Dies bedeutet, dass in einem Szenario, in welchem ein Fahrer versucht, das Fahrzeug in einem sehr hohen Gang zu starten, nahezu kein Drehmoment an die Räder geliefert wird, mit der Folge, dass die Fahrzeugbeschleunigung wesentlich niedriger als erwartet ist. Der Fahrer kann daraufhin den Gang in geeigneter Weise ändern. Demgegenüber wäre es in dem besagten hohen Gang nicht möglich, den Verbrennungsmotor wieder anzukoppeln, wenn der Elektromotor seine Leistungsgrenze erreicht. Nach dem Schalten in den geeigneten Gang kann der Verbrennungsmotor, wann immer er benötigt wird, wieder angekoppelt werden mit der Folge, dass ein nahtloser Übergang vom rein elektrischen Antriebsmodus zum Hybrid-Antriebsmodus stattfindet.

Somit wird ein Fahren im rein elektrischen Antriebsmodus bei hohen Gängen nicht nur durch ein hörbares und/oder visuelles Feedbacksignal über eine Mensch-Maschine-Schnittstelle (HMI = "human machine interface") wie z.B. einen Gangschaltanzeiger vermieden, sondern auch über eine spürbar geringe Beschleunigung des Fahrzeugs. Durch das erfindungsgemäße Verfahren wird der Fahrer somit dazu motiviert bzw. veranlasst, jederzeit in einen jeweils geeigneten Gang zu schalten.

Gemäß einer Ausführungsform ist der wenigstens eine Elektromotor im Antriebsstrang stromabwärts des Schaltgetriebes angeordnet.

Gemäß einer Ausführungsform überträgt der wenigstens eine Elektromotor das von ihm bereitgestellte Drehmoment an eine ausschließlich elektrisch angetriebene Achse.

Gemäß einer Ausführungsform weist das Hybridfahrzeug zwei separate Elektromotoren auf.

Gemäß einer Ausführungsform überträgt jeder dieser Elektromotoren das von ihm bereitgestellte Drehmoment an jeweils ein Fahrzeugrad.

Die Erfindung betrifft weiter ein Hybridfahrzeug, wobei das Hybridfahrzeug ein Schaltgetriebe sowie ein Hybridsystem mit einem Verbrennungsmotor und wenigstens einem Elektromotor aufweist, wobei das Hybridfahrzeug in einem ersten Antriebsmodus ausschließlich über den Elektromotor antreibbar ist, und wobei das Hybridfahrzeug in einem zweiten Antriebsmodus sowohl über den Elektromotor als auch über den Verbrennungsmotor antreibbar ist, wobei das Hybridfahrzeug eine Steuereinheit aufweist, welche dazu konfiguriert ist, in dem ersten Antriebsmodus das von dem wenigstens einen Elektromotor bereitgestellte Ausgangsdrehmoment abhängig von dem im Schaltgetriebe aktuell eingelegten Gang zu modifizieren.

Die Steuereinheit kann insbesondere dazu konfiguriert sein, ein Verfahren mit den vorstehend beschriebenen Merkmalen durchzuführen. Zu Vorteilen und bevorzugten Ausgestaltungen wird auf die vorstehenden Ausführungen im Zusammenhang mit dem erfindungsgemäßen Verfahren verwiesen.

Weitere Ausgestaltungen der Erfindung sind der Beschreibung sowie den Unteransprüchen zu entnehmen.

Die Erfindung wird nachstehend anhand beispielhafter Ausführungsformen unter Bezugnahme auf die beigefügten Abbildungen näher erläutert.

Es zeigen:
- Figur 1: ein schematisches Blockdiagramm zur Erläuterung einer möglichen Konfiguration des Antriebsstranges in einem Hybridfahrzeug gemäß einer ersten Ausführungsform der Erfindung;
- Figur 2-3: schematische Blockdiagramme zur Erläuterung weiterer möglicher Konfigurationen des Antriebsstranges in einem Hybridfahrzeug gemäß weiteren Ausführungsformen der Erfindung; und
- Figur 4: eine schematische Darstellung zur Erläuterung eines möglichen Ablaufs des erfindungsgemäßen Verfahrens.

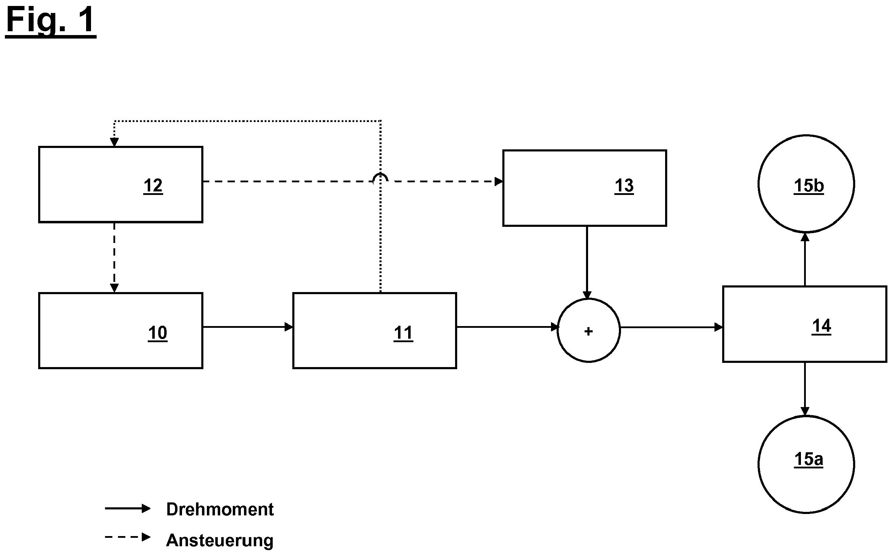

Fig. 1 zeigt ein schematisches Blockdiagramm zur Erläuterung einer möglichen Konfiguration des Antriebsstranges in einem Hybridfahrzeug gemäß einer ersten Ausführungsform der Erfindung.

Gemäß Fig. 1 werden in dem erfindungsgemäßen Antriebsstrang eines für den Zweiradantrieb ausgelegten Hybridfahrzeugs das von einem Verbrennungsmotor 10 über ein Schaltgetriebe 11 bereitgestellte Drehmoment sowie das von einem Elektromotor 13 bereitgestellte Drehmoment addiert und über einen Achsantrieb 14 an Fahrzeugräder 15a und 15b übertragen. Eine Steuereinheit 12 empfängt vom Getriebe 11 ein für den eingelegten Gang kennzeichnendes Signal und steuert dementsprechend den Elektromotor 13 sowie den Verbrennungsmotor 10 an.

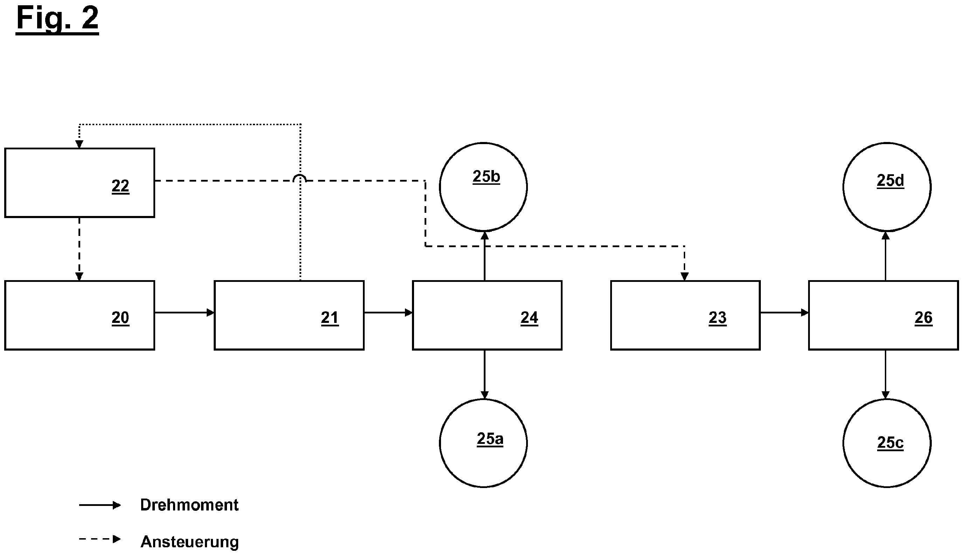

Fig. 2 zeigt ein schematisches Blockdiagramm zur Erläuterung einer weiteren möglichen Konfiguration eines Antriebsstranges in einem Hybridfahrzeug gemäß der vorliegenden Erfindung, wobei das Hybridfahrzeug in der Ausführungsform von Fig. 2 für den Allradantrieb mit einer unabhängigen angetriebenen Achse ausgestaltet ist. Dabei sind zu Fig. 1 analoge bzw. im Wesentlichen funktionsgleiche Komponenten mit um "10" erhöhten Bezugsziffern bezeichnet. Im Unterschied zu der Ausführungsform Fig.1 ist gemäß Fig. 2 der Achsantrieb 23 mit den Fahrzeugrädern 25a und 25b direkt an den Ausgang des Schaltgetriebes 21 gekoppelt, wohingegen der Elektromotor 23 das von ihm bereitgestellte Drehmoment an einen zweiten Achsantrieb 26 mit Fahrzeugrädern 25c, 25d überträgt.

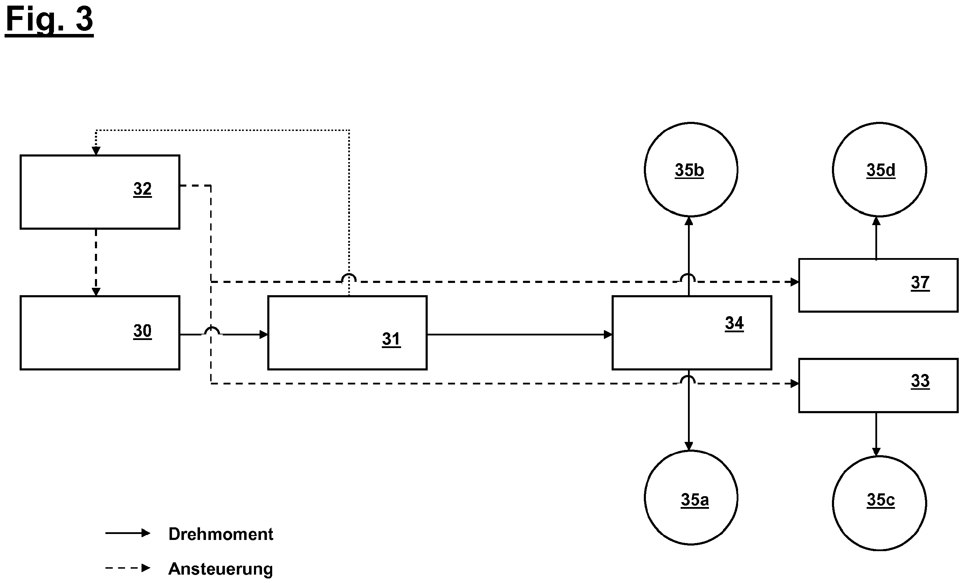

Fig. 3 zeigt ein schematisches Blockdiagramm zur Erläuterung einer weiteren möglichen Konfiguration eines Antriebsstranges in einem Hybridfahrzeug gemäß der Erfindung, wobei im Vergleich zu Fig. 2 analoge bzw. im Wesentlichen funktionsgleiche Komponenten mit wiederum um "10" erhöhten Bezugsziffern bezeichnet sind. Das Hybridfahrzeug im Ausführungsbeispiel von Fig. 3 ist analog zum Ausführungsbeispiel von Fig. 2 für den Allradantrieb ausgelegt, unterscheidet sich jedoch vom Ausführungsbeispiel von Fig. 2 dadurch, dass zwei separate Elektromotoren 33 und 37 vorgesehen sind, von denen jeder das von ihm bereitgestellte Drehmoment an jeweils ein Fahrzeugrad 35c bzw. 35d überträgt. Dabei werden beide Elektromotoren 33 und 37 analog zu den vorstehend beschriebenen Ausführungsformen durch die Steuereinheit 32 angesteuert.

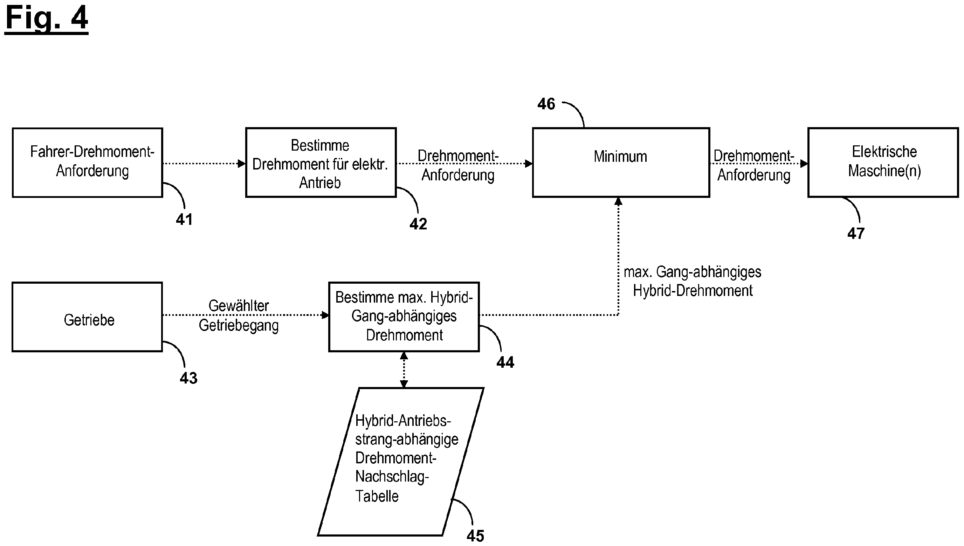

Fig. 4 zeigt eine schematische Darstellung zur Erläuterung eines möglichen Ablaufs des erfindungsgemäßen Verfahrens. Hierbei befindet sich das betreffende Hybridfahrzeug im rein elektrischen Antriebsmodus. Gemäß Fig. 4 wird für eine (durch den Block 41 repräsentierte) Drehmomentanforderung des Fahrers zunächst das entsprechende Drehmoment des elektrischen Antriebs bestimmt. Des Weiteren wird für den auf Seiten des Schaltgetriebes 43 gewählten Getriebegang das maximale, gang-abhängige Hybrid-Drehmoment bestimmt (Block 44), was anhand einer durch den Block 45 symbolisierten Nachschlagtabelle ("Lookup table") erfolgen kann. Sodann wird im Block 46 das Minimum aus der dem Block 42 entsprechenden Drehmomentanforderung (d.h. dem Drehmoment für den elektrischen Antrieb) und dem maximalen Gang-abhängigen Hybrid-Drehmoment bestimmt, und eine entsprechende Drehmomentanforderung wird an den Elektromotor (Block 47) übermittelt.

## Patentansprüche

1. Verfahren zum Betreiben eines Hybridfahrzeuges, wobei das Hybridfahrzeug ein Schaltgetriebe sowie ein Hybridsystem mit einem Verbrennungsmotor und wenigstens einem Elektromotor aufweist, wobei ein Antrieb des Hybridfahrzeuges in einem ersten Antriebsmodus ausschließlich über den Elektromotor erfolgt, und wobei ein Antrieb des Hybridfahrzeuges in einem zweiten Antriebsmodus sowohl über den Elektromotor als auch über den Verbrennungsmotor erfolgt,
**dadurch gekennzeichnet, dass**
in dem ersten Antriebsmodus das von dem Elektromotor (13, 23, 33, 37) bereitgestellte Ausgangsdrehmoment abhängig von dem im Schaltgetriebe (11, 21, 31) aktuell eingelegten Gang modifiziert wird.

2. Verfahren nach Anspruch 1, **dadurch gekennzeichnet, dass** dieses Modifizieren derart erfolgt, dass das von dem wenigstens einen Elektromotor (13, 23, 33, 37) bereitgestellte Ausgangsdrehmoment auf einen Wert begrenzt wird, der für den im Schaltgetriebe (11, 21, 31) aktuell eingelegten Gang bei Antrieb im Hybrid-Antriebsmodus vom Hybridsystem geliefert würde.

3. Verfahren nach Anspruch 1 oder 2, **dadurch gekennzeichnet, dass** dieses Modifizieren derart erfolgt, dass dem Fahrer das Vorliegen eines ungeeigneten, im Schaltgetriebe (11, 21, 31) aktuell eingelegten Ganges über eine mit dem Modifizieren einhergehende Verringerung der Fahrzeugbeschleunigung signalisiert wird.

4. Verfahren nach einem der Ansprüche 1 bis 3, **dadurch gekennzeichnet, dass** der wenigstens eine Elektromotor (13, 23, 33, 37) im Antriebsstrang stromabwärts des Schaltgetriebes (11, 21, 31) angeordnet ist.

5. Verfahren nach einem der Ansprüche 1 bis 4,
**dadurch gekennzeichnet, dass**
der wenigstens eine Elektromotor (23) das von ihm bereitgestellte Drehmoment an eine ausschließlich elektrisch angetriebene Achse überträgt.

6. Verfahren nach einem der Ansprüche 1 bis 4,
**dadurch gekennzeichnet, dass**
das Hybridfahrzeug zwei separate Elektromotoren (33, 37) aufweist.

7. Verfahren nach Anspruch 6, **dadurch gekennzeichnet, dass** jeder dieser Elektromotoren (33, 37) das von ihm bereitgestellte Drehmoment an jeweils ein Fahrzeugrad (35c, 35d) überträgt.

8. Hybridfahrzeug, wobei das Hybridfahrzeug ein Schaltgetriebe sowie ein Hybridsystem mit einem Verbrennungsmotor und wenigstens einem Elektromotor aufweist, wobei das Hybridfahrzeug in einem ersten Antriebsmodus ausschließlich über den Elektromotor antreibbar ist, und wobei das Hybridfahrzeug in einem zweiten Antriebsmodus sowohl über den Elektromotor als auch über den Verbrennungsmotor antreibbar ist,
**dadurch gekennzeichnet, dass**
das Hybridfahrzeug eine Steuereinheit (12, 22, 32) aufweist, welche dazu konfiguriert ist, in dem ersten Antriebsmodus das von dem wenigstens einen Elektromotor (13, 23, 33, 37) bereitgestellte Ausgangsdrehmoment abhängig von dem im Schaltgetriebe (11, 21, 31) aktuell eingelegten Gang zu modifizieren.

9. Hybridfahrzeug nach Anspruch 8, **dadurch gekennzeichnet, dass** die Steuereinheit dazu konfiguriert ist, ein Verfahren nach einem der vorhergehenden Ansprüche durchzuführen.
